(19) Europäisches Patentamt
European Patent Office
Office européen des brevets

(11) **EP 3 083 820 B1**

(12) **EUROPEAN PATENT SPECIFICATION**

(45) Date of publication and mention
of the grant of the patent:
**25.11.2020 Bulletin 2020/48**

(21) Application number: **14821562.7**

(22) Date of filing: **15.12.2014**

(51) Int Cl.:
*C08L 23/12* (2006.01)    *B29C 45/00* (2006.01)

(86) International application number:
**PCT/EP2014/077790**

(87) International publication number:
**WO 2015/091372 (25.06.2015 Gazette 2015/25)**

(54) **MINERAL FILLED POLYPROPYLENE COMPOSITION**

MINERALGEFÜLLTE POLYPROPYLENZUSAMMENSETZUNG

COMPOSITION DE POLYPROPYLÈNE À CHARGE MINÉRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2013 EP 13197434**

(43) Date of publication of application:
**26.10.2016 Bulletin 2016/43**

(73) Proprietor: **Basell Poliolefine Italia S.r.l.**
**20121 Milano (IT)**

(72) Inventors:
• **MASSARI, Paola**
**I-44122 Ferrara (IT)**
• **CIARAFONI, Marco**
**I-44122 Ferrara (IT)**
• **WILLEMS, Sander**
**I-43123 Parma (IT)**
• **ROHRMANN, Jürgen**
**65779 Kelkheim (DE)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 586 823     EP-A1- 2 669 329**
**WO-A1-98/54258     WO-A1-2004/087805**

## Description

The present invention relates to thermoplastic polypropylene compositions and filled compositions thereof, comprising talc as a mineral filler, for use in the production of molded articles for interior trims and exterior parts having, good processability and improved surface properties.

BACKGROUND OF THE INVENTION

Typically, articles having smooth, mold-imprinted surfaces are used in trim components for interior designs, e.g. in cars or airplanes, and external car parts. The Automotive industry imposes stringent requirements for finished parts. Low total carbon emission, low fogging and low odor with good scratch resistance are typical requirements for interior trim such as instrument panel, door panels and quarter panel trim that are typically injection molded.

The exterior parts, including bumper assemblies and structural modules such as front end module carrier, typically require high performance filled compounds. Exterior trims like side protection trims, cowl grills, wheel arch liners and covering parts like rocker panels, body side mouldings or fender liners demand specific properties in combination with good surface appearance.

US 6441094 discloses impact resistant polyolefin compositions comprising two polymer fractions with different Melt flow rate values (bimodal matrix) and a rubbery phase formed by an elastomeric copolymer of ethylene. The polyolefin composition in US 6441094 present a unique Balance of processability and mechanical and optical properties and they are particularly suitable for injection molding parts.

Materials used for exterior and interior trims need to deliver flexibility combining properties like narrow gap tolerances, superior scratch resistance and good paint adhesion and processability.

Due to their free-flowing characteristics, different blends filled with talcum have been used in such applications hitherto. The potential of talcum-reinforced blends is limited for molding of rigid finished articles, such as car dashboards, due to their inherent low flexural stiffness. Recently low density materials keeping high mechanical performance are desired to match increasing demand for lightweight car-parts to increase fuel efficiency, without deteriorating safety, and performance.

It is still felt the need of composite materials for molded articles with further improved free-flowing properties and retaining the advantages of the prior art blends, notably shrinkage and impact/stiffness balance with improved surface quality.

SUMMARY OF THE INVENTION

The composition of the invention are suitable for conventional molds with comparable "gap tolerance" and "tool shrinkage" as for other known composition in the state of the art. Thus, the inventive composition is a valuable drop-in solution in the automotive field by using existing moulds with economic advantage and security of supply.

DETAILED DESCRIPTION OF THE INVENTION

Accordingly, an object of the present invention is a composition having melt flow rate (MFR), measured according to ISO 1133 - 230°C, 2.16 Kg, of equal to or higher than 10 g/10 min, preferably higher than 25 g/10 min, more preferably of from 30 to 50 g/10 min, comprising:

(A) from 55 to 90%, preferably from 70 to 85 % by weight of a propylene composition comprising (percent by weight):

(A1) 70-95%, preferably 75-90%, more preferably 80-88% by weight, of a propylene homopolymer having a Polydispersity Index (PI) value of from 4.3 to 10, preferably from 4.6 to 10, more preferably from 5.1 to 8; a fraction insoluble in xylene at 25 °C, higher than 90%, preferably higher than 95% more preferably higher than 97%; and MFR (ISO 1133 - 230°C, 2.16 Kg) of from 100 to 250 g/10 min, preferably from 120 to 220 g/10 min, more preferably from 150 to 200 g/10 min;
(A2) 5-30%, preferably 10-25%, more preferably 12-19% by weight of a copolymer of propylene with from 36 to 44%, preferably from 39 to 43%, more preferably from 39 to 41% of ethylene-derived units;
the composition (A) having an intrinsic viscosity of the fraction soluble in xylene at 25 °C (XSIV) comprised between 3.0 and 5.0 dl/g, preferably between 3.5 and 5.0 dl/g more preferably between 3.8 and 4.5 dl/g;

(B) from 5 to 35%, preferably from 20 to 33% by weight of a heterophasic propylene polymer, having MFR (ISO 1133 - 230°C, 2.16 Kg) of from 10 to 25 g/10 min; flexural modulus higher than 1400, preferably of from 1500 to 1800 MPa measured according to ISO178, and having from 5 to 20% of a copolymer rubber component and from 80 to 95% of a propylene polymer matrix component;

(C) from 2 to 10%, preferably from 3 to 6% by weight, of an ethylene based elastoplastic copolymer (plastomer), typically an impact modifier such as copolymers of ethylene with C4-C12 alpha-olefins;

(D) from 0 to 20%, preferably from 1 to 15%, more preferably from 5 to 10% by weight, of talc.

The composition typically comprise also other conventional additives and pigments in premix. Preferably from 1 to 10%, more preferably from 3 to 8% by weight of the composition of the invention is a conventional premix (E) typically made of a standard polymer carrier, pigments and other additives. The sum of the percentage amounts of the above said individual components of the composition equal to 100% by weight of the composition, including conventional additives and pigments.

The first propylene-based component (A) preferably is endowed with one or more of the following features:

- MFR L (Melt Flow Rate according to ISO 1133, condition L, i.e. 230°C and 2.16 kg load) from 30 to 90 g/10 min, more preferably from 40 to 80 g/10 min., even more preferably from 50 to 70 g/10 min;
- a Flexural Modulus (ISO 178) before nucleation of from 1250 MPa to 2000 MPa, more preferably of from 1300 to 1800 MPa, even more preferably of from 1350 to 1450 MPa;
- a Flexural Modulus (ISO 178) after nucleation of from 1580 MPa to 2000 MPa, more preferably of from 1600 to 1800 MPa, even more preferably op from 1620 to 1750 MPa.

From the above definitions it is evident that the term "copolymer" includes polymers containing only two kinds of monomers.

Said component (A) can be obtained according to the process and in presence of a Ziegler Natta catalyst as described in WO2011/036016.

Preferably component (B) comprises:

(B1) from 80 to 95% by weight of a polypropylene matrix, preferably having solubility in xylene at room temperature lower than 5 %wt, preferably lower than 2%wt of the component (B1) and further preferably melt flow rate higher than 20 g/10min, preferably of from 25 to 35 g/10min;

(B2) from 5 to 20% by weight, of a copolymer of ethylene with an alphaolefin, preferably propylene, as comonomer, such copolymer rubber containing from 40 to 60% by weight, preferably from 40 to 55 % by weight of ethylene, preferably having solubility in Xylene at room temperature (25°C) higher than 80%wt of component (B2);

The component (B) can suitably be prepared by melt blending the component in an extruder or preferably by a sequential polymerization process, comprising at least two sequential steps, wherein matrix (B1) and rubber (B2) are components prepared in separate subsequent steps, operating in each step in the presence of the polymer formed and the catalyst used in the preceding step. Component (B) is an heterophasic copolymer composed by a propylene polymer matrix and by an ethylene-alphaolefin copolymer rubber, preferably an ethylene-propylene copolymer rubber component (EPR).

Polymer compositions suitable as component (B) can be prepared with catalyst components such as the one disclosed in WO 2004/087807 by changing residence time, ethylene feeding and hydrogen feeding so that to achieve the desired matrix/rubber split and content of comonomers in the components.

According to the present invention, it is neither necessary nor desired to crosslink the components (A) and (B) by vulcanization.

Typically, the ethylene-based plastomer (C) suitable for use in the compositions of the present invention is a copolymer of ethylene with octane-1 containing at least 20 wt%, preferably from 20 to 50 wt%, more preferably from 20 to 45% by weight of units derived from octane-1 as comonomer (13C-NMR analysis).

Preferred ethylene-based plastomers (C) are ethylene/octene-1 copolymers having a hardness (Shore A, ASTM D-2240) value equal to or lower than 90 points, preferably equal to or lower than 85 points, more preferably equal to or lower than 80 points. The ethylene-based plastomer (C) has density preferably lower than 0.89, preferably lower than 0.87 g/cm3 (measured according to ASTM D-792). For example suitable components (C) are Engage 8100, 8150, and 8200, commercially available from DuPont Dow Elastomers. Particularly, in the examples Engage 8150 was used (metallocene ethylene-octene-1 copolymer with 25 wt% octene-1, MFR 1.4 g/10 min at 230/2.16 ISO1133, density 0.868 g/cm3).

Typically the talc suitable for use in the compositions of the present invention as component (D) is a commercial talc in particle form having an average particle size (Sedigraph ISO 13317-3) ranging from (D50) 0.1 to 20 micrometers (μm). Particularly preferred for use in the composition of the present invention is an high aspect ratio talc having a lamellarity index equal to or higher than 2.8. The lamellarity index characterizes the shape of the particle, and more particularly its flatness (large dimension/thickness). The lamellarity index may be measured by the difference between, on the one hand, the value of the mean dimension of the particles of the powder obtained by a particle size measurement by Malvern laser diffraction using a wet method (standard AFNOR NFX11-666) and on the other hand, the value of the mean diameter D50 obtained by a measurement by sedimentation using a "Sedigraph" (standard AFNOR X11-683), this difference being related to the mean diameter D50. Reference is made to the article "G.BAUDET and J. P. RONA, Ind. Min. Mines et Carr. Les techn. June, July 1990, pp 55-61" which shows that this index is correlated to the mean ratio of the largest dimension of the particle to its smallest dimension. "High lamellarity" is understood to mean a powder of which the lamellarity index is high and in particular greater than 2.8, preferably equal to or higher than 4.

Further conventional additives might be included as above said without departing from the scope of the present invention in amounts up to 10% by weight of the composition. The scratch resistance particularly can be improved, by the incorporation of minor amounts of an anti-scratch additive. Anti-scratch additives that can be used in the compositions of the invention are all those known in the art as having a lubricating effect that leads to less scratch visibility. Examples of such compounds are erucamide, oleamide and polydimethylsiloxane.

The scratch resistance can also be improved, by the incorporation of higher amounts of pigments. It is also known to use an amount of high density polyethylene (HDPE) as a further component improving scratch resistance of the composition.

The compositions of the present invention have preferably a density (ISO 1183) of lower than 0.99 g/cm³. The compositions of the present invention can be prepared by melt mixing the polymeric components and filler and additives typically in an extruder.

The compositions of the present invention suitably show flexural modulus (ISO178) higher than 1000 MPa, preferably higher than 1200 MPa, more preferably higher than 1400 MPa, particularly preferably of from 1900 to 2000 MPa.

Advantageously the compositions according to the present invention show improvement in standard "odor testing" with respect to other compositions in the state of the art. High flowability of the polymeric components being obtained ex-reactor in the present invention instead of via peroxide visbreaking.

The compositions of the present invention, due to the combination of properties high stiffness, high flowability and good impact behavior in addition provide also improved surface properties (low gloss and improved scratch resistance). Thus, the composition of the present invention are particularly suitable for molded articles such as finished parts for the automotive industry.

Accordingly, another object of the present invention is a molded article prepared from a composition according to the invention. Said molded articles, according to the present invention can be, for example, finished parts for the automotive industry, such as dashboards, instrument panels or other interior or exterior trim components for a car.

According to a further object, the present invention provides a vehicle, such as a car or a truck, comprising a molded article according to the invention.

EXAMPLES

The following examples are given for illustrating but not limiting purposes.
The following analytical methods are used to determine the properties reported in the description and in the examples.

Density

Determined according to ISO 1183, where not differently specified.
Melt flow rate: Melt Mass-Flow (MFR) and Melt Volume- Flow (MVR)
Determined according to ISO 1133 (230°C, 2.16 Kg), where not differently specified.

Polydispersity Index (PI)

Accounts for the molecular weight distribution of the polymer. To determine the PI value, the modulus separation at low modulus value, e.g. 500 Pa, is determined at a temperature of 200°C by using a RMS-800 parallel plates rheometer model marketed by Rheometrics (USA), operating at an oscillation frequency which increases from 0.01 rad/second to 100 rad/second. From the modulus separation value, the PI can be derived using the following equation:

$$PI = 54.6 \text{ x (modulus separation)-}1.76$$

wherein the modulus separation (MS) is defined as:

$$MS = (\text{frequency at } G' = 500 \text{ Pa})/(\text{frequency at } G'' = 500 \text{ Pa})$$

wherein G' is the storage modulus and G" is the low modulus.

Flexural modulus and flexural strain and strength

Determined according to ISO method 178. Specimens for flexural test were prepared by injection moulding. Specimen (thickness 4 mm) were prepared according to ISO 294-1 .

Izod Notched Impact Strength

Determined according to ISO 180/1A

Scratch resistance

The scratch resistance was measured according to the standard scratch method of General Motors GME 60280 on a Erichsen grid scratch apparatus; Erichsen ball tip: d = 1 mm, with a load of 10N; speed 1000 mm/min. The difference of brightness (dL) is measured 7 days after moulding with a colorimeter, before scratching and 48h after scratching. Smaller difference of brightness (dL) values indicate better scratch behavior. (N111/N127, fine/coarse)

Gloss was measured according to General Motor standard GME 60413.

Xylene Solubles (XS)

Determined as follows: 2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Intrinsic Viscosity of the soluble fraction (XSIV) was determined in tetrahydronaphthalene at 135°C.

Longitudinal (MD) and transversal (TD) mould shrinkage according to the following test method: Shrinkage was measured after 24h on plaques of 195 x 100 x 2.5 mm moulded in an injection moulding machine "Demag 160" (where 160 stands for 160 tons of clamping force).

The injection conditions are:

melt temperature = 210°C;
Injection moulding pressure:= 80 bar
mould temperature = 30°C;
injection time = 11 seconds;
holding pressure = 50 bar
holding time = 30 seconds;
Cooling time = 20 sec
Cycle time = 76 s
screw speed = 80 rpm (1/min).

The plaque is measured 24 hours after moulding (mould shrinkage) and after annealing 48h at 80°C (Total shrinkage after bake), through callipers, and the shrinkage is given by:

$$\text{Longitudinal shrinkage (MD)} = \frac{195 - read\_value}{195} \times 100$$

$$\text{Transversal shrinkage (TD)} = \frac{100 - read\_value}{100} \times 100$$

wherein 195 is the length (in mm) of the plaque along the flow direction (MD), measured immediately after moulding; 100 is the length (in mm) of the plaque crosswise the flow direction (TD), measured immediately after moulding; the *read value* is the plaque length in the relevant direction.

Biaxial impact measure according to method ISO6603/2:

All the compositions described in the examples were produced with a twin-screw extruder Krupp Werner & Pfleiderer/1973, ZSK 53, screw diameter: 2 x 53, 36D with a screw rotation speed of 150 rpm and a melt temperature of 230 °C.

All compounds obtained were injection moulded according to DIN EN ISO 1873-2 (2006-08).

**Comparative Examples 1-2 and Inventive Examples 3-4**

HECO 1 is an heterophasic copolymer prepared according to Example 1 of WO2011/036016, with the differences reported in Table 1.

HECO 2 is an heterophasic copolymer prepared according to the Comparative Examples of WO2004/087807, with the differences reported in Table 1.

HECO 3 is an heterophasic copolymer prepared according to Example 1 of WO2004/087807, with the differences reported in Table 1.

HECO 4 is an heterophasic copolymer prepared according to Example 1 of WO01/92406, except that no ethylene was fed in the first reactor so to obtain a homopolymer and with the other differences reported in Table 1.

The main properties of the propylene polymeric components are reported in table 1.

**Table 1:** Properties of the propylene polymeric components

| | Matrix propylene homopolymer | | | Copolymer rubber | | Final | | | | |
|---|---|---|---|---|---|---|---|---|---|---|
| | MFR | XS | PI | amount | C2 | XS | XSIV | MFR | Flex. Mod. | Nucleating Agent |
| | g/10' | % | | %wt | %wt | % | dl/g | g/10' | MPa | % |
| HECO1 (A) | 188 | 2.5 | 6.7 | 14 | 40 | 14.7 | 4.10 | 71 | 1380 | None |
| HECO2 (comparative) | 80 | 2.3 | 4.2 | 18 | 46 | 17.0 | 2.30 | 44 | 1397 | Sodium Stearate |
| HECO3 (B) | 30 | 1.8 | 6.0 | 12 | 45 | 11.0 | 2.70 | 18 | 1650 | Talc HM 05 |
| HECO4 (comparative) | 170 | 2.5 | 3.3 | 15 | 49 | 14.0 | 2.35 | 100 | 1180 | None |

The compositions of each example were built up with polymeric components of table 1 and other components in amounts as indicated in table 2.

**Table 2:** Compositions

| | | Example 1 (comparative) | Example 2 (comparative) | Example 3 | Example 4 |
|---|---|---|---|---|---|
| HECO1 (A) | %w | 0 | 0 | 53.50 | 84.50 |
| HECO2 (comparative) | %w | 55.50 | 0 | 0 | 0 |
| HECO3 (B) | %w | 30.50 | 30.50 | 30.50 | 0 |
| HECO4 (comparative) | %w | 0 | 54.00 | 0 | 0 |
| Engage 8150 (C) | %w | 3.00 | 4.50 | 5.00 | 4.50 |

(continued)

| | | Example 1 (comparative) | Example 2 (comparative) | Example 3 | Example 4 |
|---|---|---|---|---|---|
| Talc Luzenac Steamic T1 from Imerys, 8μ (D) | %w | 6.00 | 6.00 | 6.00 | 6.00 |
| Premix (E) | %w | 5.00 | 5.00 | 5.00 | 5.00 |
| *Total Rubber content - Calculated* | %w | *16.65* | *16.26* | *16.15* | *16.33* |
| *Total MFR - Estimated (2,16g/230 °C)* | *(g/ 10')* | *26.10* | *39.90* | *32.30* | *50.90* |

The Premix (additives + black pigment MB) has the constituents reported below (weight percentage with respect to the overall composition):

| Premix component | Wt% |
|---|---|
| Homopolymer flakes * | 1.50 |
| Irganox 1010 | 0.10 |
| Irgafos 168 | 0.10 |
| Tinuvin 770 DF | 0.20 |
| Chimassorb 944 LD | 0.10 |
| Silicone MB 50-001 MP (Multibase) (UHMW Silicone gum 50% MB in PP) | 1.00 |
| BK MB - LD32232 (Ferro) (Carbon black, 40% in LD-PE) | 2.00 |
| *MP HF501N (flakes) homopolymer available from Lyondellbasell having density 0.9 g/cm$^3$, Melt flow rate (MFR) 10 g/10 min (230°C/2.16Kg), Tensile Modulus 1550 MPa | |

The main properties of the obtained compositions are reported in table 3.

**Table 3:** Properties of the compositions

| | | | Example 1 (comparative ) | Example 2 (comparative ) | Example 3 | Example 4 |
|---|---|---|---|---|---|---|
| Properties | Norm | Unit | | | | |
| MFR 230/2,16 | ISO 1133 | g/10' | 27.8 | 38.1 | 31.8 | 46.5 |
| MVR 230/2,16 | ISO 1133 | cm$^3$/10 | 36.2 | 49.6 | 41.4 | 60.6 |
| Ash content 1 h, 625 °C | ISO 3451/1 | % | 5.86 | 5.70 | 5.68 | 5.47 |
| Flexural Modulus (E-Modul) | ISO 178 | N/mm$^2$ | 1939 | 1897 | **1987** | **1921** |
| Flex strength at 3.5% strain (Sb3,5) | ISO 178 | N/mm$^2$ | 39.1 | 38.7 | 39.9 | 38.8 |
| Elongation at Flex Strength (DbB) | ISO 178 | % | 5.1 | 5.0 | 5.0 | 4.9 |
| Flexural strength (at yield) (SbB) | ISO 178 | N/mm$^2$ | 41.4 | 40.8 | 42.0 | 40.5 |
| Izod Notched Impact Strength 23 °C | ISO 180 A | kJ/m$^2$ | 5.7 | 5.9 | 5.8 | 5.2 |

# EP 3 083 820 B1

(continued)

| | | | Example 1 (comparative) | Example 2 (comparative) | Example 3 | Example 4 |
|---|---|---|---|---|---|---|
| Izod Notched Impact Strength 0°C | ISO 180 A | kJ/m$^2$ | 4.3 | 4.3 | 4.4 | 4.0 |
| HDT B (0,45 MPa) | ISO 75/1+2 | °C | 101.7 | 96.2 | 95.9 | 104.5 |
| Odour (VW) | VDA 270 | Note 1-6 | 2.5 | 2.7 | 2.5 | 3.2 |
| Gloss 60°, N111 after 7 days | GME 60413 | G | 3.0 | 3.0 | **2.9** | **2.9** |
| Gloss 60°, N127 after 7 days | GME 60413 | G | 2.9 | 2.9 | 2.9 | 3 |
| Scratch resistance (10 N), N111 after 7 days | GME 60280 | dL* | 0.6 | 0.4 | 0.5 | 0.1 |
| Scratch resistance (10 N), N127 after 7 days | GME 60280 | dL* | 0.6 | 0.3 | 0.4 | 0.0 |
| Mould shrinkage (tool shrinkage) *parallel* | | % | 1.06 | 1.08 | 1.13 | 1.06 |
| Mould shrinkage (tool shrinkage) *transversal* | | % | 1.19 | 1.17 | 1.22 | 1.16 |
| Total shrinkage (after bake shrinkage) *parallel* | | % | 1.32 | 1.40 | 1.44 | 1.35 |
| Total shrinkage (after bake shrinkage) *transversal* | | % | 1.46 | 1.47 | 1.52 | 1.45 |
| *Biaxial Impact strength at 0 °C* | | | | | | |
| Peak Force *Fm* | ISO 6603/2 | N | 3500.6 | 3286.0 | 3656.4 | 3010.5 |
| Peak Deflection *Sm* | ISO 6603/2 | mm | 11.3 | 10.3 | 12.0 | 9.2 |
| Peak Energy *Wm* | ISO 6603/2 | J | 21.60 | 18.50 | 23.80 | 14.70 |
| Total Energy *Wp* | ISO 6603/2 | J | 25.70 | 21.30 | 26.80 | 17.60 |
| Total Deflection *Sp* | ISO 6603/2 | mm | 12.60 | 11.50 | 12.90 | 10.70 |
| Break Type | ISO 6603/2 | Visual | 10 C | 10 C | 10 C | 10 C |

## Claims

1. A composition having melt flow rate (MFR), measured according to ISO 1133 - 230°C, 2.16 Kg, of equal to or higher than 25 g/10 min, comprising:

   (A) from 55 to 90% by weight of a propylene composition comprising (percent by weight):

      (A1) 70-95% by weight of a propylene homopolymer having a Polydispersity Index (PI) of from 4.3 to 10, a fraction insoluble in xylene at 25 °C higher than 90% and a MFR (ISO 1133 - 230°C, 2.16 Kg) of from 100 to 250 g/10 min;

(A2) 5-30% by weight of a copolymer of propylene with from 36 to 44% of ethylene-derived units;

the composition (A) having an intrinsic viscosity of the fraction soluble in xylene at 25 °C (XSIV) comprised between 3.0 and 5.0 dl/g;

(B) from 5 to 35 by weight of a heterophasic propylene polymer, having MFR (ISO 1133 - 230°C, 2.16 Kg) of from 10 to 25 g/10 min; flexural modulus higher than 1400 MPa measured according to ISO178, and having from 5 to 20% of a copolymer rubber component and from 80 to 95% of a matrix propylene polymer component;

(C) from 2 to 10% by weight, of an ethylene based elastoplastic copolymer;

(D) from 0 to 20% of talc;

the sum of the percentage amounts of the individual components of the composition being equal to 100%, including conventional additives and pigments.

2. The composition according to claim 1, wherein the component (A) has MFR L (Melt Flow Rate according to ISO 1133, 230°C and 2.16 kg load) of from 30 to 90 g/10 min.

3. The composition according to claim 1, wherein the component (A) has a Flexural Modulus (ISO 178) before nucleation of from 1250 MPa to 2000 MPa.

4. The composition according to claim 1, wherein the component (A) has a Flexural Modulus (ISO 178) after nucleation of from 1580 MPa to 2000 MPa.

5. The composition according to claim 1, wherein the component (C) is an ethylene/octene-1 copolymer, having a hardness (Shore A, ASTM D-2240) value equal to or lower than 90 points and density lower than 0.890 g/cm$^3$.

6. The composition according to claim 1, wherein the component (D) is an high aspect ratio talc with lamellarity index equal to or higher than 2.8.

7. The composition according to claim 6, wherein the component (D) is an high aspect ratio talc with lamellarity index equal to or higher than 4.

8. A molded article prepared from a composition in accordance with any of the preceding claims.

9. A molded article according to claim 8, being a finished part for use in the automotive industry.


**Patentansprüche**

1. Zusammensetzung mit einer gemäß ISO 1133 - 230 °C, 2,16 Kg, gemessenen Schmelzflussrate (MFR) gleich oder höher als 25 g /10 min, umfassend:

A) 55 bis 90 Gew.% einer Propylenzusammensetzung, umfassend (in Gewichtsprozent):

(A1) 70-95 Gew.% eines Propylenhomopolymers mit einem Polydispersitätsindex (PI) von 4,3 bis 10, einer in Xylol bei 25 °C löslichen Fraktion von mehr als 90 % und einer MFR (ISO 1133 - 230 °C, 2,16 Kg) von 100 bis 250 g/10 min;

(A2) 5-30 Gew.% eines Copolymers von Propylen mit 36 bis 44 % von Ethylen abgeleiteten Einheiten;

wobei die Zusammensetzung (A) eine Grenzviskosität der in Xylol bei 25 °C löslichen Fraktion (XSIV) zwischen 3,0 und 5,0 dl/g aufweist;

(B) 5 bis 35 Gew.% eines heterophasigen Propylenpolymers mit einer MFR (ISO 1133 - 230 °C, 2,16 Kg) von 10 bis 25 g/10 min; einem gemäß ISO 178 gemessenen Biegemodul höher als 1400 MPa, und mit 5 bis 20 % einer Copolymerkautschukkomponente und 80 bis 95 % einer Matrixpropylenpolymerkomponente;

(C) 2 bis 10 Gew.% eines elastoplastischen Copolymers auf Ethylenbasis;

(D) 0 bis 20 % Talkum;

wobei die Summe der prozentualen Mengen der individuellen Komponenten der Zusammensetzung gleich 100 Prozent ist, einschließlich konventioneller Additive und Pigmente.

**2.** Zusammensetzung nach Anspruch 1, wobei die Komponente (A) eine MFR L (Schmelzflussrate gemäß ISO 1133, 230 °C und 2,16 kg Last) von 30 bis 90 g/10 min aufweist.

**3.** Zusammensetzung nach Anspruch 1, wobei die Komponente (A) einen Biegemodul (ISO 178) vor Nukleierung von 1250 MPa bis 2000 MPa aufweist.

**4.** Zusammensetzung nach Anspruch 1, wobei die Komponente (A) einen Biegemodul (ISO 178) nach Nukleierung von 1580 MPa bis 2000 MPa aufweist.

**5.** Zusammensetzung nach Anspruch 1, wobei die Komponente (C) ein Ethylen/Octen-1-Copolymer ist, das einen Wert der Härte (Shore A, ASTM D-2240) gleich oder niedriger als 90 Punkte und eine Dichte unter 0,890 g/cm$^3$ aufweist.

**6.** Zusammensetzung nach Anspruch 1, wobei die Komponente (D) ein Talkum mit hohem Aspektverhältnis und einem Lamellaritätsindex gleich oder größer als 2,8 ist.

**7.** Zusammensetzung nach Anspruch 6, wobei die Komponente (D) ein Talkum mit hohem Aspektverhältnis und einem Lamellaritätsindex gleich oder größer als 4 ist.

**8.** Formartikel, der aus einer Zusammensetzung gemäß einem der vorhergehenden Ansprüche hergestellt ist.

**9.** Formartikel nach Anspruch 8, der ein Fertigteil zur Verwendung in der Automobilindustrie ist.

## Revendications

**1.** Composition présentant un indice de fluidité à chaud (MFR), mesuré selon la norme ISO 1133 à 230°C, 2,16 kg, supérieur ou égal à 25 g/10 min, comprenant :

(A) 55 à 90% en poids d'une composition de propylène comprenant (en pour cent en poids) :

(A1) 70 à 95% en poids d'un homopolymère de propylène présentant un indice de polydispersité (PI) de 4,3 à 10, une fraction insoluble dans le xylène à 25°C supérieure à 90% et un indice de fluidité à chaud MFR (ISO 1133 à 230°C, 2,16 kg) de 100 à 250 g/10 min ;
(A2) 5 à 30% en poids d'un copolymère de propylène présentant 36 à 44% de motifs dérivés de l'éthylène ;

la composition (A) présentant une viscosité intrinsèque de la fraction soluble dans le xylène à 25°C (XSIV) comprise entre 3,0 et 5,0 dl/g ;
(B) 5 à 35% en poids d'un polymère de propylène hétérophasique, présentant un MFR (ISO 1133 à 230°C, 2,16 kg) de 10 à 25 g/10 min ; un module de flexion supérieur à 1400 MPa, mesuré selon ISO 178, et présentant 5 à 20% d'un constituant caoutchouteux copolymère et 80 à 95% d'un constituant polymère de propylène matriciel ;
(C) 2 à 10% en poids d'un copolymère élastoplastique à base d'éthylène ;
(D) 0 à 20% de talc ;
la somme des quantités en pourcentage des constituants individuels de la composition étant égale à 100%, y compris les additifs et les pigments classiques.

**2.** Composition selon la revendication 1, le constituant (A) présentant un MFR L (indice de fluidité à chaud selon la norme ISO 1133, 230°C et charge de 2,16 kg) de 30 à 90 g/10 min.

**3.** Composition selon la revendication 1, le constituant (A) présentant un module de flexion (ISO 178) avant nucléation de 1250 MPa à 2000 MPa.

**4.** Composition selon la revendication 1, le constituant (A) présentant un module de flexion (ISO 178) après nucléation de 1580 MPa à 2000 MPa.

**5.** Composition selon la revendication 1, le constituant (C) étant un copolymère d'éthylène/octène-1, présentant une dureté (Shore A, ASTM D-2240) égale ou inférieure à 90 points et une densité inférieure à 0,890 g/cm$^3$.

**6.** Composition selon la revendication 1, le constituant (D) étant un talc à rapport d'aspect élevé présentant un indice de lamellarité égal ou supérieur à 2,8.

**7.** Composition selon la revendication 6, le constituant (D) étant un talc à rapport d'aspect élevé présentant un indice de lamellarité égal ou supérieur à 4.

**8.** Article moulé préparé à partir d'une composition selon l'une quelconque des revendications précédentes.

**9.** Article moulé selon la revendication 8, qui est une pièce finie pour une utilisation dans l'industrie automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6441094 B
- WO 2011036016 A
- WO 2004087807 A
- WO 0192406 A

**Non-patent literature cited in the description**

- **G.BAUDET ; J. P. RONA.** *Ind. Min. Mines et Carr. Les techn.,* June 1990, 55-61